# EUROPEAN PATENT APPLICATION

(11) **EP 1 942 400 A1**
(43) Date of publication of application: **09.07.2008**
(21) Application number: 06811854.6
(22) Date of filing: 16.10.2006
(51) Int. Cl.: G06F 3/048, H04M 1/247

(54) **MOBILE TERMINAL, AND ITS MENU DISPLAY METHOD**

(30) Priority: 17.10.2005 JP 2005301540
(71) Applicant: NEC Corporation, Minato-ku Tokyo 108-8001 (JP)
(72) Inventor: SHIROTA, Hirobumi, Tokyo 1088001 (JP)
(74) Representative: Vossius & Partner
(86) International application number: PCT/JP2006/320599
(87) International publication number: WO 2007/046343

(57) **Abstract**

Provided is a portable terminal including a display section having a display screen, a storage section and a control section. Entire menu screen information corresponding to entire of menus which cannot be accommodated in the display screen and have a hierarchical structure is stored in advance in the storage section. The control section generates folded screen information corresponding to a folded screen which can be displayed on the display screen by applying a folding processing to the entire menu screen information and has the folded screen displayed on the display screen of the display section in response to the folded screen information.

## Description

### Technical Field

The present invention relates to a portable terminal for displaying menus having a hierarchical structure and a menu display method for displaying menus having a hierarchical structure on a display screen of a portable terminal.

### Background Art

A portable terminal such as a portable telephone displays menus having a hierarchical structure composed of a plurality of hierarchies. Generally, when the menus having the hierarchical structure are displayed, one display screen often fails to display all of the menus due to large amount of data of the menus (for example, due to large number of items of the menus). One method for coping with such problem is to use scroll display. When the scroll display is employed, respective items of the menus are partially displayed on a display screen, and then the display screen is scrolled in accordance with a user's operation through an operation section. In another coping method, for example, as disclosed in Japanese Laid Open Patent Application (JP-A-Heisei, 5-134834), Japanese Laid Open Patent Application (JP-A-Heisei, 8-16349) and Japanese Laid Open Patent Application (JP-P 2001-359009A), a plurality of menus of different hierarchies are superimposed on the same display screen.

However, when the scroll display is used to display the menus having the hierarchical structure, the entire menus cannot be viewed in one screen at a time and viewing at a sight (or capability to view the entire at a time) cannot be secured. For this reason, it is difficult for a user to grasp linkages of the items from upper hierarchy to lower hierarchy of the menus.

When the screen display methods described in Japanese Laid Open Patent Application (JP-A-Heisei, 5-134834), Japanese Laid Open Patent Application (JP-A-Heisei, 8-16349) and Japanese Laid Open Patent Application (JP-P 2001-359009A) are applied to a portable terminal, menus can be displayed such that the menus are easily viewable to some extent. However, since the menus in respective hierarchies are merely displayed with being superimposed each other, the structure of the entire menus cannot be grasped and the linkages of the items from upper hierarchy to lower hierarchy of the menus cannot be easily grasped. Moreover, since menu data corresponding to menu screen of each hierarchy is necessary, it is required to prepare a plurality of pieces of menu data in order to display the menus having a hierarchical structure, thus resulting in large amount of data.

### Disclosure of Invention

Therefore, an object of the present invention is to provide a portable terminal and a menu display method which are able to improve viewing at a sight for entire menus in displaying the menus having a hierarchical structure and improve convenience for a user.

In an aspect of the present invention, a portable terminal includes: a display section having a display screen; a storage section for storing in advance entire menu screen information corresponding to entire of menus which cannot be accommodated in the display screen and have a hierarchical structure; and a control section configured to generate folded screen information corresponding to a folded screen which can be displayed on the display screen by applying a folding processing to the entire menu screen information and has the folded screen displayed on the display screen of the display section in response to the folded screen information. The folding processing means processing, for example, of enabling display of one menu screen as if the menu screen is partially folded by performing processing such as deleting portions other than portions as displayed objects in the entire menus.

The control section may, at every input of change instruction to an operation section, apply a folding processing to the entire menu screen information in response to the change instruction and, at every application of the folding processing, have the folded screen redisplayed on the display screen in response to folded screen information generated through the folding processing.

The folded screen may include: an upper hierarchy display area as an area for displaying items of an upper hierarchy included in the menus; and a lower hierarchy display area as an area for displaying items of a lower hierarchy included in the menus.

The control section may generate the folded screen information such that an item name of the upper hierarchy is partially displayed in the upper hierarchy display area.

Further, the control section may have an item name of the upper hierarchy scroll-displayed. For example, the control section may have a string of a selected item name among item names of the upper hierarchy scrolled from right to left as a ticker.

In another aspect of the present invention, a menu display method for displaying menus which cannot be accommodated in a display screen of a display section of a portable terminal and have a hierarchical structure composed of a plurality of hierarchies on the display section, including: a screen information storing step for storing in advance entire menu screen information corresponding to entire of the menus; a menu folding step for generating folded screen information corresponding to a folded screen which can be displayed on the display screen by applying a predetermined folding processing to the entire menu screen information; and a menu displaying step for displaying the folded screen on the display screen of the display section in response to the folded screen information.

In further another aspect of the present invention, recording medium records a program for displaying menus which cannot be accommodated in a display screen of a display section of a portable terminal and have a hierarchical structure composed of a plurality of hierarchies on the display section. The program is coded such that, when the program is executed by a processor, the processor executes following steps: a menu folding step for generating folded screen information corresponding to a folded screen which can be displayed on the display screen by applying a predetermined folding processing to entire menu screen information corresponding to entire of the menus; and a menu displaying step for displaying the folded screen on the display screen of the display section in response to the folded screen information.

In further another aspect of the present invention, provided is a program for displaying menus which cannot be accommodated in a display screen of a display section of a portable terminal and have a hierarchical structure composed of a plurality of hierarchies on the display section. The program is coded to have a processor execute: a menu folding step for generating folded screen information corresponding to a folded screen which can be displayed on the display screen by performing a predetermined folding processing to entire menu screen information corresponding to entire of the menus; and a menu displaying step for displaying the folded screen on the display screen of the display section in response to the folded screen information.

According to the present invention, one menu screen is displayed in such a manner, as if being partially folded to be accommodated in a display screen by applying a predetermined folding processing to entire menu screen information including entire of menus having a predetermined hierarchical structure. For this reason, menu items of a plurality of hierarchies of the menus having the predetermined hierarchical structure can be displayed at the same time and the display screen can be used efficiently. In addition, a user can grasp at a glance a linkage between an upper hierarchy and a lower hierarchy included in the menus, and viewing at a sight for the entire menus can be improved. Accordingly, the present invention is able to improve the viewing at a sight for the entire menus in displaying the menus having the hierarchical structure and to improve convenience for the user.

Moreover, when the present invention is configured to include a screen information storing means for storing in advance screen information including entire of menus having a predetermined hierarchical structure and to apply a predetermined folding processing based on the screen information stored in advance, if only one piece of the screen information of the entire of the menus is stored in advance, the menus having the predetermined hierarchical structure can be displayed on one screen. For this reason, there is no need to store in advance screen information of a display screen of each hierarchy. Accordingly, components for displaying menus (for example, screen information) can be reduced and a screen display area can be used efficiently.

Moreover, when the present invention is configured to display a display screen including an upper hierarchy display area displaying partially an item name of an upper hierarchy included in the menus, a menu item of the upper hierarchy can be preview-displayed.

Moreover, when the present invention is configured to scroll-display an item name of an upper hierarchy, even if a string of a menu item of the upper hierarchy is partially hidden by applying folding processing, a user can confirm entire of the item name of the menu item.

### Brief Description of Drawings

Fig. 1 is a perspective view showing one example of a portable terminal employing a menu display method according to the present invention;
Fig. 2 is a block diagram showing a configuration of a portable telephone;
Fig. 3 is an explanatory drawing showing an example of screen information of an entire menu screen stored in a storage section;
Fig. 4 is a flowchart showing an example of menu displaying processing in which the portable telephone performs folding processing on menus having a hierarchical structure to display the menus;
Fig. 5 is an explanatory drawing showing an example of layout of a display screen displayed by applying folding processing to the entire menu screen;
Fig. 6 is an explanatory drawing showing an example of layout of the display screen redisplayed by applying folding processing to the entire menu screen in accordance with change instruction by a user;
Fig. 7 is an explanatory drawing showing another example of processing of redisplaying by applying folding processing to the entire menu screen in accordance with change instruction by the user; and
Fig. 8 is an explanatory drawing showing an example of processing of scroll-displaying as a ticker a menu item displayed in a partially hidden state.

### Best Mode for Carrying Out the Invention

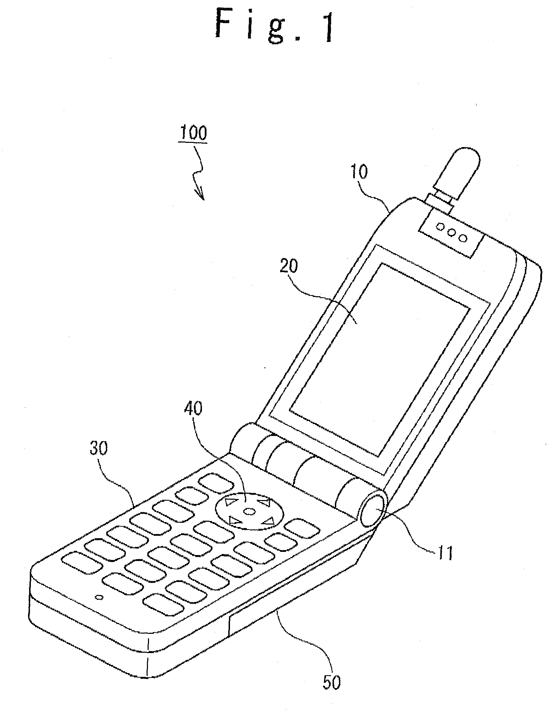

Referring to the attached drawings, exemplary embodiments of the present invention will be described below. Fig. 1 is a perspective view showing one example of a portable terminal employing a menu display method according to the present invention. As shown in Fig. 1, in the present exemplary embodiment, a case that the portable terminal is a folding portable telephone 100 will be described as an example. Fig. 1 shows the folding portable telephone 100 in an open state. And now, not limited to a portable telephone, the portable terminal may be a terminal such as PHS for example.

As shown in Fig. 1, the folding portable telephone 100 includes a display section side housing 10 including a display section 20, and an operation section side housing 30 including an operation section 40 having a plurality of key buttons. The display section side housing 10 and the operation section side housing 30 are, for example, made of rigid bodies using synthetic resin or the like. In addition, the display section side housing 10 and the operation section side housing 30 are connected each other via a hinge portion 11 having an open-close axis such that they can perform rotational motion. The "rotational motion" refers to circular motions in forward and reverse directions with respect to an axis. In the folding portable telephone 100 according to the present exemplary embodiment, the display section side housing 1 can be closed to and opened from the operation section side housing 3 with the hinge portion 11 as an axis, for example. In addition, as shown in Fig. 1, the operation section side housing 30 installs a battery pack 50 on a back surface thereof.

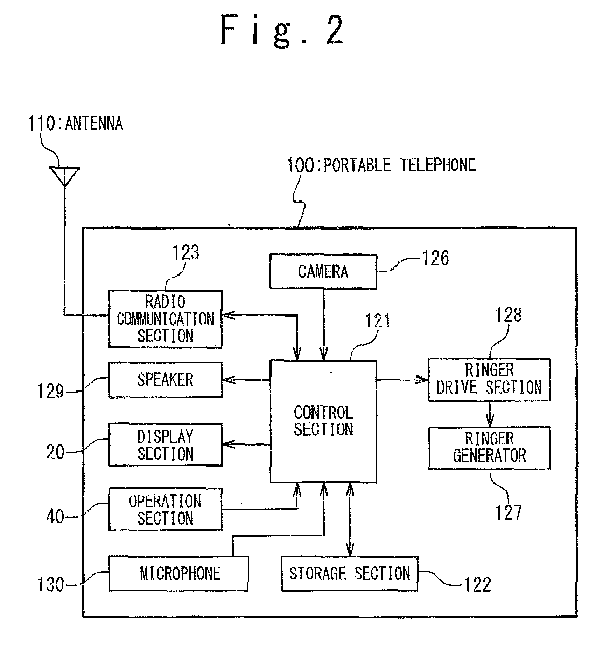

Fig. 2 is a block diagram showing an example of a configuration of the portable telephone 100. As shown in Fig. 2, the portable telephone 100 includes an antenna 110 for transmitting and receiving radio wave, a control section 121, a storage section 122, a radio communication section 123, the operation section 40, the display section 20, a camera unit (hereinafter, referred to as "camera") 126, a ringer generator 127, a ringer drive section 128, a speaker 129 for audio output, and a microphone 130 for audio input.

The storage section 122 is configured by a recording medium such as RAM for example, and stores various types of data such as control program executed by the control section 121. In addition, a portion of the storage section 122 may be composed of ROM, and the control program may be stored in the ROM portion.

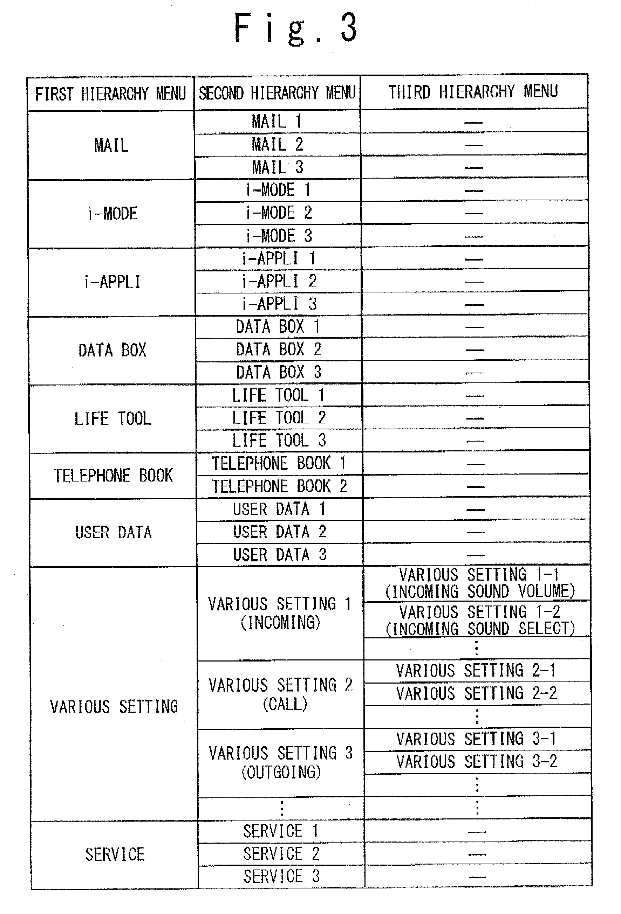

Moreover, the storage section 122 stores in advance entire menu screen information including whole contents of a display screen (hereinafter, also referred to as entire menu screen) for displaying menus having a predetermined hierarchical structure. Fig. 3 is an explanatory drawing showing an example of the entire menu screen information stored in the storage section 122. As shown in Fig. 3, in the present exemplary embodiment, the storage section 122 stores in advance one piece of the entire menu screen information corresponding to the menus including a plurality of hierarchies (a first hierarchy to a third hierarchy in the present example). In addition, the entire menu screen information, includes menu items for each of the hierarchies. As shown in Fig. 3, a menu of the first hierarchy, for example, includes "mail", "i-mode (registered mark)", "i-appli (registered mark)-", and so on as menu items. Although explained is a case that the storage section 122 stores the entire menu screen information including three hierarchies in the present exemplary embodiment, the storage section 122 may store entire menu screen information including two hierarchies or entire menu screen information including four or more hierarchies.

The control section 121 is specifically configured by a CPU (central processing unit) and various types of peripheral circuits which are not shown in the drawings, and has functions for controlling respective sections included in the folding portable telephone 100. In the present exemplary embodiment, the control section 121 controls the display section 20 to display the menus having the predetermined hierarchical structure based on the entire menu screen information stored in the storage section 122.

In the present invention, when the entire menu screen indicated by the entire menu screen information stored in the storage section 122 is displayed on the display section 20, the entire menu screen is too large to be displayed as it is such that the entire menu screen is accommodated in a display screen of the display section 20. In the present exemplary embodiment, the control 1 section 121 processes one piece of the entire menu screen information stored in the storage section 122 and controls the display section 20 to display that with being accommodated in one screen.

Then, in the present exemplary embodiment, the control section 121 generates a folded screen having a form as if one entire menu screen is partially folded, and has the folded screen displayed on the display section 20. The folded screen is generated to be accommodated in the display screen of the display section 20. To be specific, the control section 121 generates folded screen information corresponding to the folded screen by performing processing on the entire menu screen information such that portions other than portions as displayed objects are deleted from the entire menu screen. For example, the control section 121 generates the folded screen information by processing the entire menu screen information such that a portion of the entire menu screen is deleted, blank portion, between the menu items is deleted, a width of a display area is restricted or the like, and thereby has the display section 20 display the folded screen which can be accommodated in the display screen of the display section 20.

Hereinafter, the processing for the screen information of the entire menu screen performed by the control section 121 is also referred to as folding processing, and performing the processing on the entire menu screen information is also expressed as folding the entire menu screen. The CPU configuring the control section 121 operates, for example, in accordance with the control program stored in the storage section 122.

The radio communication section 123 has a function for modulating and demodulating signals in accordance with a predetermined communication protocol. Specifically, the radio communication section 123 performs processing of receiving radio signals via the antenna 110 and of demodulating the signals. In addition, the radio communication section 123 performs processing of modulating signals outputted from the control section 121 and of transmitting them as radio signals via the antenna 110.

The operation section 40 is configured by the key buttons for inputting telephone number and the like, for example. The operation section 40 has a function of outputting input signal in response to user's operation to the control section 121.

The display section 20 is configured by LCD (Liquid Crystal Display) for example, and arranged on a position which is inside of the housings when the portable telephone 100 is folded. The display section 20 displays the menus having the predetermined hierarchical structure, a standby screen, a function setting screen, and so on.

The camera 126 has various types of functions included in a digital camera for example, and includes image sensors such as CCD for imaging an object, a circuit for outputting image data obtained by the imaging to the control section 121, and the like.

The ringer drive section 128 has a function for outputting a driving signal to the ringer generator 127 in accordance with the control by the control section 121.

The ringer generator 127 has a function for outputting incoming sound in accordance with the driving signal from the ringer drive section 128.

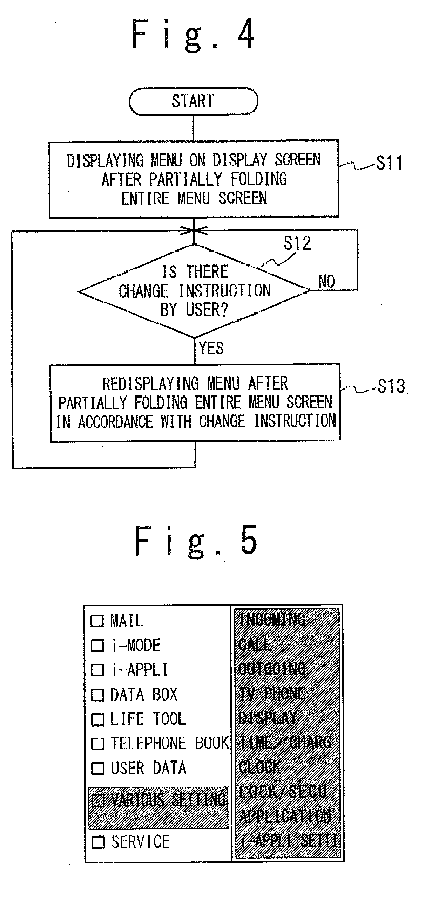

Next, operations will be explained. Fig. 4 is a flowchart showing an example of menu displaying processing in which the portable telephone 100 performs the folding processing and has the folded screen displayed. When wanting to see the menus, the user instructs displaying the menu by operating the operation section 40 of the portable telephone 100. The control section 121 receives a display instruction of the menus from the operation section 40 based on the instruction operation by the user. Then the control section 121 generates the folded screen information by applying the folding processing to the entire menu screen information stored in the storage section 122, and has the display section 20 display the folded screen which can be accommodated in the display screen (step S11).

Fig. 5 is an explanatory drawing showing an example of layout of the folded screen obtained by applying the folding processing to the entire menu screen information shown in Fig. 3. As shown in Fig. 5, the control section 121 processes the entire menu screen information such that the plurality of the hierarchies are accommodated in one screen and the entire menu screen is partially folded, and has the display section20 display the respective menu items.

As shown in fig. 5, the folded screen includes a left side screen area and a right side screen area. In the preset exemplary embodiment, the control section 121 has the display section 20 display the folded screen including menu items of an upper hierarchy (for example, first hierarchy) in the left side screen area and menu items of a lower hierarchy (for example, second hierarchy) in the right side screen area.

In the present exemplary embodiment, when displaying menus is instructed by the user at first time, the control section 121 generates the folded screen in which respective menu items of a first hierarchy menu are displayed in the left side screen area. In this case, for example, the control section 121, by applying processing of deleting blank portion between the menu items of the first hierarchy menu (narrowing the blank portion) or processing of restricting the left side screen area to a predetermined display width, performs processing such that the respective menu items of the first hierarchy menu can be accommodated in one screen (in the display area of the display section 20).

In addition, the control section 121 generates the folded screen such that the respective menu items of the second hierarchy menu corresponding to a selected menu item in the left side screen area are displayed in the right side screen area. Hereinafter, the selected menu item in the left side screen area is referred to as noted state item. Fig. 5 shows that "various setting" is selected as noted state item. In detail, the control section 121, for example, applies processing of deleting portions including menu items (for example, portions including the items of "mail" and "i-mode") other than the noted state item ("various setting" in the present example) among the respective menu items of the second hierarchy menu and processing of deleting all portions of the third hierarchy menu. By doing so, in the entire menu screen, the portions of the menu items of the second hierarchy menu other than the noted state item and the portions of the menu items of the third hierarchy menu are folded, and only menu items of the second hierarchy menu corresponding to the noted state item are displayed in the right side screen area.

In the example shown in Fig. 5, the respective menu items displayed in the left side screen area are in an active state (or state able to accept an input). For example, the user can instruct to select one of the menu items in the left side screen area by moving a cursor in the left side screen area through operation of the display section 20. In the example shown in Fig. 5, "various setting" is selected among the respective menu items of the first hierarchy menu displayed in the left side screen area. Moreover, in the example shown in Fig. 5, the respective menu items displayed in the right side screen area are inactive state (state unable to accept an input).

When wanting to change a displayed portion in the entire menus, the user makes a change instruction by operating the operation section 40. The control section 121 receives the change instruction for the menu display screen in response to the instruction operation by the user from the operation section 40. The control section 121 judges whether or not the change instruction for the display screen is inputted by the user (step S12). When judging that the change instruction for the display screen was inputted by the user, the control section 121, in accordance with the change instruction by the user, applies again the folding processing to the entire menu screen information stored in the storage section 122, and has the folded screen redisplayed on the display section 20 (step S13).

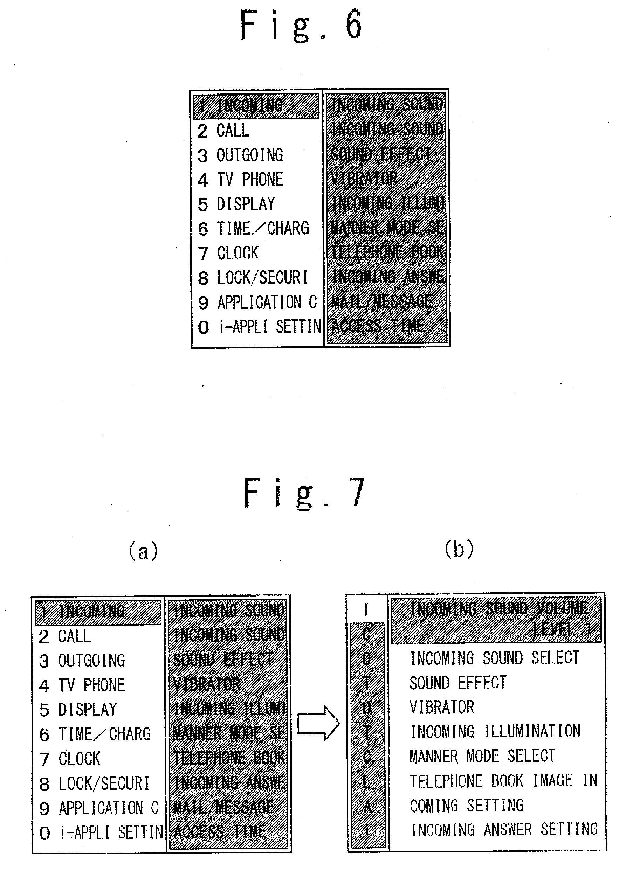

Fig. 6 is an explanatory drawing showing an example of layout of the folded screen redisplayed by applying the folding processing to the entire menu screen information in accordance with the change instruction by the user. In the example shown in Fig. 6, the control section 121 generates the folded screen displaying the menu items of the second hierarchy menu (in the present example, items corresponding to "various setting" in the first hierarchy menu) in the left side screen area and displaying menu items of the third hierarchy menu in the right side screen area, and has the folded screen redisplayed. In this case, for example, the control section 121 applies to the entire menu screen information, processing of deleting the portions of the first hierarchy menu and the portions of items other than the displayed objects among the respective menu items of the second hierarchy menu and the third hierarchy menu and processing of restricting display width of the left side screen area and the left side screen area. By doing so, in the entire menu screen, the portions of the first hierarchy menu and the portions of the items other than displayed objects among the respective menu items of the second hierarchy menu and the third hierarchy menu are folded, and only the items as displayed objects among the respective menu items of the second hierarchy menu and the third hierarchy menu.

When changing the display screen of the menus in step S13, the control section 121 may change the display screen of the menus in such a display manner, as if a sheet of menu screen is refolded.

Returning to step S12, the control section 121 repeatedly performs the processing of step S12 and step S13. That is to say, the control section 121, in accordance with change instructions by the user, repeatedly performs processing of applying the folding processing to the entire menu screen information and of having the folded screen redisplayed on the display section 20. By doing so, one sheet of menu screen can be displayed in such a manner, as if being repeatedly and partially folded so as to be accommodated in one screen, and thus menu items of the plurality of hierarchies of the menus having the hierarchical structure can be displayed at the same time. Consequently, the user can grasp at a glance linkage between the upper hierarchy and the lower hierarchy included in the menus, and viewing the entire menus at a sight can be improved.

Next, another example of processing of applying the folding processing in accordance with the change instruction by the user and of having the folded screen redisplayed in step S13 will be described. Fig. 7 is an explanatory drawing showing the other example of processing of applying the folding processing to the entire menu screen information in accordance with the change instruction by the user and of having the entire menu screen redisplayed. At first, as shown in Fig. 7 (a), the portable telephone 100 displays the folded screen including the menu items of the second hierarchy in the left side screen area and the menu items of the third hierarchy in the right side screen area. In the example shown in Fig. 7 (a), the menu items (menu items of the second hierarchy) included in the left side screen area of the display screen are in an active state and the menu items (menu items of the third hierarchy) included in the right side screen area are in an inactive state.

In step S12, when detecting an input of change instruction for setting in the active state the menu items (menu items of the third hierarchy) included in the right side screen area, the control section 121 regenerates the folded screen in which the respective menu items included in the right side screen area are in the active state and has the display section 20 display it, as shown in Fig. 7(b). In addition, as shown in Fig. 7(b), the control section 121 regenerates the folded screen in which strings of item names of the menu items (the menu items of the second hierarchy) included in the left side area are partially omitted (for example, only the first letter of each item name is left) and has the display section 20 display it. Such display may be referred to as preview display. By doing so, the item names of the menu items included in the left side screen area are partially folded and the menu items of the second hierarchy can be preview-display.

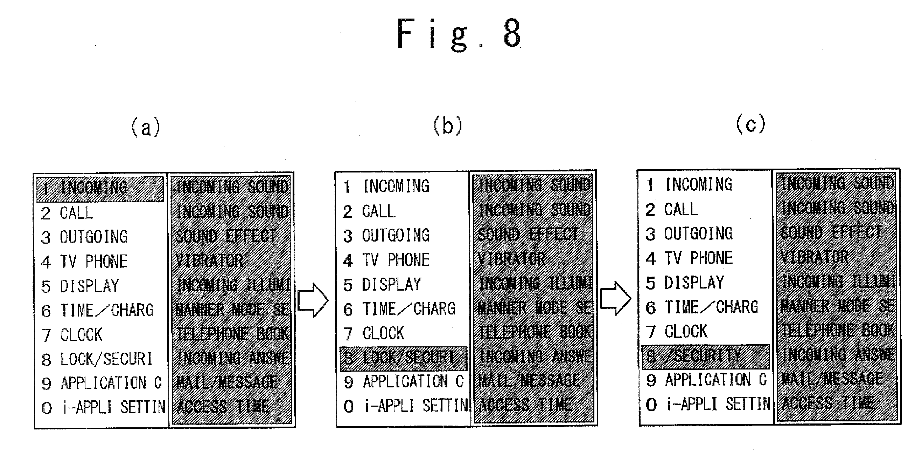

In addition, when the menus are displayed after the folding processing such that the menu items are displayed in a state of being partially hidden (for example, the processing is performed in which the display width of the display area is significantly restricted), the menu item displayed in the state of partially hidden may be scroll-displayed as a ticker in accordance with an instruction by the user. Fig. 8 is an explanatory diagram showing an example of processing of scroll-displaying the menu item displayed in the state of partially hidden as a ticker in accordance with the instruction by the user. At first, the portable telephone 100 displays the folded screen including the menu items of the second hierarchy in the left side screen area and the menu items of the third hierarchy in the right side screen area, as shown in Fig. 8(a). In the example shown in Fig. 8(a), the menu items (menu items of the second hierarchy) included in the left side screen area of the folded screen are in the active state and menu items (menu items of the third hierarchy) included in the right side screen area are in the inactive state.

In the example shown in Fig. 8 (a), since the menus is displayed after the folding processing, a string of item name "lock/security" among the menu items included in the left side screen area is in a partially hidden state. In this case, when wanting to confirm whole of the item name "lock/security", the user instructs to select the menu item "lock/security" through operation of the operation section 40 (for example, moving the cursor on the "lock/security").

As shown in Fig. 8(b), when detecting the selected state (noted state) of the menu item "lock/security", the control section 121 starts scroll display of the noted state item "lock/ security". In this case, the control section 121, for example, displays the entire string of the noted state item "lock/security" as a ticker with scrolling from right to left, as shown in Fig. 8 (c). In this case, the control section 121 displays the entire string of the noted state item "lock/ security" as a ticker with scrolling twice. But, the control section 121 may display the entire string of the noted state item "lock/security" with scrolling only once and may display it with scrolling three or more times. By doing so, even if string of a menu item is partially hidden by applying the folding processing, whole of item name of the menu item can be confirmed.

As described above, according to the present exemplary embodiment, the portable telephone 100 stores in advance one piece of the entire menu screen information corresponding to the entire menu screen having the predetermined hierarchical structure. And, by applying the predetermined folding processing to the entire menu screen information, the portable telephone 100 displays one sheet of menu screen in such a manner, as if the menu screen is partially folded so as to be accommodated in one screen. For this reason, menu items of a plurality of hierarchies of menus having the predetermined hierarchical structure can be displayed at the same time, and a display area can be saved by displaying the menu screen in such a manner, as if the menu screen is partially folded. In addition, the user can grasp at a glance a linkage between the upper hierarchy and the lower hierarchy included in the menus, and viewing entire menus at a sight can be improved. Accordingly, viewing entire menus at a sight can be improved in case of displaying the menus having the hierarchical structure, and convenience for the user can be improved.

According to the present exemplary embodiment, if only storing one piece of the entire menu screen information in advance, the portable telephone 100 is able to display the menus having the predetermined hierarchical structure on one screen by applying the predetermined folding processing. For this reason, the portable telephone 100 needs not store in advance screen information of display screens of respective hierarchies. Therefore, amount of hardware for displaying menus (for example, hardware for storing screen information) can be reduced and the screen display area of the display section 20 can be used efficiently.

## Claims

1. A portable terminal comprising:
a display section having a display screen;
a storage section for storing in advance entire menu screen information corresponding to entire of menus which cannot be accommodated in said display screen and have a hierarchical structure; and
a control section configured to generate folded screen information corresponding to a folded screen which can be displayed on said display screen by applying a folding processing to said entire menu screen information and has said folded screen displayed on said display screen of said display section in response to said folded screen information.

2. The portable terminal according to claim 1, wherein said control section performs on said entire menu screen information a processing of deleting portions other than portions as displayed objects from said entire of said menus in said folding processing.

3. The portable terminal according to claim 2, wherein said control section, at every input of change instruction to an operation section, applies a folding processing to said entire menu screen information in response to said change instruction and, at every application of said folding processing, has said folded screen redisplayed on said display screen in response to folded screen information generated through said folding processing.

4. The portable terminal according to claim 3, wherein said folded screen includes:
an upper hierarchy display area as an area for displaying items of an upper hierarchy included in said menus; and
a lower hierarchy display area as an area for displaying items of a lower hierarchy included in said menus, and
said control section, based on said folded screen information, has a folded screen displayed which includes said upper hierarchy display area and said lower hierarchy display area.

5. The portable terminal according to claim 4, wherein said control section generates said folded screen information such that an item name of said upper hierarchy is partially displayed in said upper hierarchy display area.

6. The portable terminal according to claim 4, wherein said control section has an item name of said upper hierarchy scroll-displayed.

7. A menu display method for displaying menus which cannot be accommodated in a display screen of a display section of a portable terminal and have a hierarchical structure composed of a plurality of hierarchies on said display section, comprising:
a screen information storing step for storing in advance entire menu screen information corresponding to entire of said menus;
a menu folding step for generating folded screen information corresponding to a folded screen which can be displayed on said display screen by applying a predetermined folding processing to said entire menu screen information; and
a menu displaying step for displaying said folded screen on said display screen of said display section in response to said folded screen information.

8. The menu display method according to claim 7, wherein a processing of deleting portions other than portions as displayed objects from said entire of said menus is performed in said folding processing of said menu folding step.

9. The menu display method according to claim 8, wherein at every input of change instruction to an operation section, a folding processing is applied to said entire menu screen information in response to said change instruction, and
at every application of said folding processing, said folded screen is redisplayed on said display screen in response to folded screen information generated through said folding processing.

10. The menu display method according to claim 9, wherein said folded screen includes:
an upper hierarchy display area as an area for displaying items of an upper hierarchy included in said menus; and
a lower hierarchy display area as an area for displaying items of a lower hierarchy included in said menus, and
said folded screen including said upper hierarchy display area and said lower hierarchy display area is displayed based on said folded screen information in said menu displaying step.

11. The menu display method according to claim 10, wherein said folded screen information is generated such that an item name of said upper hierarchy is partially displayed in said upper hierarchy display area.

12. The menu display method according to claim 10, wherein an item name of said upper hierarchy is scroll-displayed.

13. A recording medium recording a program for displaying menus which cannot be accommodated in a display screen of a display section of a portable terminal and have a hierarchical structure composed of a plurality of hierarchies on said display section, wherein when said program is executed by a processor, said processor executes following steps:
a menu folding step for generating folded screen information corresponding to a folded screen which can be displayed on said display screen by applying a predetermined folding processing to entire menu screen information corresponding to entire of said menus; and
a menu displaying step for displaying said folded screen on said display screen of said display section in response to said folded screen information.

14. A program for displaying menus which cannot be accommodated in a display screen of a display section and have a hierarchical structure composed of a plurality of hierarchies on said display section, wherein said program have a processor execute:
a menu folding step for generating folded screen information corresponding to a folded screen which can be displayed on said display screen by applying a predetermined folding processing to entire menu screen information corresponding to entire of said menus; and
a menu displaying step for displaying said folded screen on said display screen of said display section in response to said folded screen information.
